# EUROPÄISCHE PATENTANMELDUNG

(11) **EP 2 369 330 A1**
(43) Veröffentlichungstag der Anmeldung: **28.09.2011**
(21) Anmeldenummer: 11155574.4
(22) Anmeldetag: 23.02.2011
(51) Int. Cl.: G01N 27/06, G01F 23/24

(54) **Messvorrichtung zum Erfassen der Leitfähigkeit einer Flüssigkeit**

(30) Priorität: 10.03.2010 DE 102010002739
(71) Anmelder: DBK David + Baader GmbH, 76870 Kandel (DE)
(72) Erfinder: Paul, Jürgen, 76297 Stutensee (DE); Merkel, Oliver, 76831 Billigheim-Ingenheim (DE); Riehling, Achim, 76879 Bornheim (DE); Scholl, Dietmar, 67295 Bolanden (DE)
(74) Vertreter: Winter, Brandl, Fürniss, Hübner, Röss, Kaiser, Polte - Partnerschaft

(57) **Zusammenfassung**

Offenbart wird eine Messvorrichtung zum Erfassen der Leitfähigkeit einer in einem Behälter befindlichen Flüssigkeit; diese Messvorrichtung weist mindestens ein Elektrodenpaar auf, das innerhalb des Behälters angeordnet und dort der zu messenden Flüssigkeit ausgesetzt ist. Eine Ansteuerelektronik legt an das jeweilige Elektrodenpaar eine bezüglich Masse symmetrische, im wesentlichen gleichspannungsfreie Wechselspannung an und ermittelt aus dem sich benetzungsabhängig ändernden Widerstand des Elektrodenpaars die Leitfähigkeit der Flüssigkeit. Erfindungsgemäß erzeugt die Ansteuerelektronik eine unsymmetrische Wechselspannung, deren Phasen die gleiche Polarität aufweisen, setzt diese unsymmetrische Wechselspannung in die an dem jeweiligen Elektrodenpaar anliegende symmetrische Wechselspannung um und ermittelt dann die Leitfähigkeit der Flüssigkeit aus dem Signalverlauf der unsymmetrischen Wechselspannung.

## Beschreibung

Die vorliegende Erfindung bezieht sich auf eine Messvorrichtung zum Erfassen der Leitfähigkeit einer in einem Behälter befindlichen Flüssigkeit gemäß dem Oberbegriff des Anspruchs 1. Gegenstand der Erfindung ist ferner ein entsprechendes Messverfahren gemäß Anspruch 11.

Bei bekannten Messvorrichtungen zum Erfassen der Leitfähigkeit einer in einem Behälter befindlichen Flüssigkeit wird an ein Messelektrodenpaar eine bezüglich Masse symmetrische, im Wesentlichen gleichspannungsfreie Wechselspannung angelegt. Hätte die angelegte Wechselspannung nämlich einen Gleichanteil oder würde man gar eine Gleichspannung anlegen, käme es an den Elektroden des Messelektrodenpaares zu unerwünschter Korrosion und/oder in der Flüssigkeit zu elektrochemischen Reaktionen, die die Eigenschaften der Flüssigkeit ändern würden, was in den meisten Fällen nicht zulässig ist.

Zur Signalauswertung, d.h. zur Ermittlung der Leitfähigkeit der Flüssigkeit, wird die an dem Elektrodenpaar anliegende Wechselspannung dann einer Auswerteelektronik zugeführt. In der Praxis besteht meist die Aufgabe, aus dieser Messung letztlich den Füllstand des betreffenden Behälters zu bestimmen. Wenn im Behälter beispielsweise ein einziges, in der Nähe des Behälterbodens waagrecht angeordnetes Messelektrodenpaar vorgesehen ist, benetzt die Flüssigkeit das Messelektrodenpaar solange, bis der Pegel der Flüssigkeit, d.h. der Füllstand des Behälters unter das Niveau des Messelektrodenpaars gesunken ist. Das ausgewertete Signal, das zunächst eine hohe Leitfähigkeit, d.h. einen geringen Widerstandswert, zwischen den beiden Elektroden des Messelektrodenpaars angezeigt hat, zeigt dann - da Luft ein sehr guter Isolator ist - einen sehr hohen Widerstandswert an. Diese plötzliche Signaländerung kann als Anzeige des erreichten Füllstands herangezogen werden. Wenn mehrere, bei bestimmten Pegeln angeordnete Messelektrodenpaar vorhanden sind, können entsprechend mehrere Füllstände ermittelt werden.

Wenn das Messelektrodenpaar senkrecht im Behälter angeordnet ist, ändert sich der zwischen den beiden Elektroden erfasste Widerstandswert in etwa proportional zum jeweiligen Füllstand, so dass der momentane Füllstand des Behälters kontinuierlich angezeigt werden kann; eine solche Messvorrichtung könnte dann beispielsweise als Tankanzeige in einem Kraftfahrzeug verwendet werden.

In modernen Messvorrichtungen erfolgt die eigentliche Signalverarbeitung in der Regel digital, d.h. dem zentralen Mikroprozessor wird das zu bewertende Signal nach entsprechender Wandlung durch einen Analog-Digital-Umsetzer (A/D-Wandler) zugeführt. Obgleich derzeit erhältliche A/D-Wandler sehr preiswert und zum Teil sogar Bestandteil von Mikrocontroller-Bausteinen sind, sind sie in der Regel nur zum Erfassen von positiven Spannungen geeignet, da elektronische Steuereinrichtungen, insbesondere wenn sie integrierte Mikrocontroller enthalten, häufig mit einer einzigen positiven Versorgungsspannung auskommen müssen. Die bei der Füllstandsmessung verwendete gleichspannungsfreie Wechselspannung kann aufgrund ihrer negativen Signalanteile daher nur dann gemessen werden, wenn sie vor der Messung gleichgerichtet wird. Eine solche Gleichrichtung bedeutet nahezu den gleichen Schaltungsaufwand, als wenn ein D/A-Wandler zur Verfügung gestellt wird, der aufgrund einer zusätzlichen negativen Versorgungsspannung auch negative Spannungen erfassen kann.

Der vorliegenden Erfindung liegt die Aufgabe zugrunde, eine Messvorrichtung gemäß dem Oberbegriff des Anspruchs 1 so weiterzubilden, dass die Leitfähigkeit einer Flüssigkeit mit einem möglichst geringen zusätzlichen Schaltungsaufwand gemessen werden kann.

Diese Aufgabe wird erfindungsgemäß mit den im Kennzeichnungsteil des Anspruchs 1 angegebenen Maßnahmen gelöst.

Die Erfindung schlägt demnach vor, zunächst eine unsymmetrische Wechselspannung zu erzeugen, deren Phasen die gleiche Polarität aufweisen, diese unsymmetrische Wechselspannung anschließend in die an dem jeweiligen Elektrodenpaar anliegende symmetrische Wechselspannung umzusetzen und schließlich die Leitfähigkeit der Flüssigkeit aus dem Signalverlauf der unsymmetrischen Wechselspannung zu ermitteln. Der Kern der Erfindung liegt in der Erkenntnis, dass bei der Erzeugung einer symmetrischen Wechselspannung aus einer unsymmetrischen Wechselspannung die Leitfähigkeit der zu erfassenden Flüssigkeit eine solche Rückwirkung auf die eingangsseitige unsymmetrische Wechselspannung ausübt, dass deren Signalverlauf ebenfalls als Maß für die Leitfähigkeit herangezogen werden kann. Dadurch wird erreicht, dass in den jeweiligen Messwert nur positive Spannungen einfließen, weshalb für die sich anschließende Auswertung weder eine Gleichrichtung noch eine A/D-Wandlung mit negativen Versorgungsspannungen erforderlich ist. Der zusätzliche Schaltungsaufwand für die Erfindung ist somit sehr klein, so dass die Herstellungskosten der Messvorrichtung gering gehalten werden können.

Die Polarität der bei der Erfindung verwendeten unsymmetrische Wechselspannung ist vorzugsweise positiv, da insbesondere bei der hier im Vordergrund stehenden Kraftfahrzeugtechnik in erster Linie mit positiven Versorgungsspannungen gearbeitet wird.

Gemäß der im Anspruch 2 angegebenen Weiterbildung der Erfindung wird die unsymmetrische Wechselspannung vorzugsweise an den Eingang eines Kondensators angelegt, dessen Ausgangsanschluss mit der einen Elektrode des jeweiligen Elektrodenpaars verbunden ist, während die andere Elektrode des Elektrodenpaars an Masse liegt. Diese Schaltungsanordnung hat den Vorteil, dass die unsymmetrische Wechselspannung durch Verwendung nur eines einzigen Bauteils in Form des Kondensators in die an den Elektroden des Messelektrodenpaares benötigte symmetrische Wechselspannung umgesetzt werden kann. Der Schaltungsaufwand zur Erzeugung der zur Vermeidung von Elektrolyse benötigten unsymmetrischen Wechselspannung ist daher minimal.

Gemäß der Lehre des Anspruchs 3 hat es sich als vorteilhaft erwiesen, zur Signalauswertung bei jeder zweiten Phase des unsymmetrischen Rechtecksignals, vorzugsweise in der Mitte dieser Phase, die am Eingang des Kondensators anliegende Spannung zu erfassen und daraus die Leitfähigkeit der Flüssigkeit bzw. den aktuellen Füllstand zu ermitteln. Eine solche Messung kann problemlos mit einem herkömmlichen A/D-Wandler unter Verwendung eines Mikroprozessors durchgeführt werden. Gemäß Anspruch 4 ist es möglich, die Einflüsse von zufällig auftretenden Fehlern, wie beispielsweise Rauschen, dadurch zu verringern, dass die Leitfähigkeit der Flüssigkeit aus einer Mittelwertbildung mehrerer aufeinanderfolgender Messvorgänge ermittelt wird.

Es gibt eine Reihe von Flüssigkeiten, deren chemische Zusammensetzung sich im Laufe der Zeit ändert, so dass sich in der Regel auch ihre Leitfähigkeit ändert. Ein Beispiel hierfür ist wässrige Harnstofflösung, die im Zusammenhang mit der SCR-Technologie zur Verbesserung des Abgasverhaltens von Dieselmotoren, beispielsweise in Kraftfahrzeugen, verwendet wird. Da die Behälter für die wässrige Harnstofflösung so dimensioniert sind, dass erst nach einem relativ langen Zeitraum nachgetankt werden muss, stellt die Alterung hier in der Tat ein Problem dar, da sich die Leitfähigkeit im Laufe der Zeit ändert, so dass bei Verwendung eines senkrecht angeordneten Elektrodenpaars zur Erzielung einer kontinuierlichen Messanzeige nicht unerheblich Messfehler auftreten.

Dieses Problem der alterungsbedingten Messfehler kann mit der im Anspruch 8 angegebenen Weiterbildung der Erfindung dadurch gelöst werden, dass in der Nähe des Bodens des Behälters ein Referenzelektrodenpaar vorgesehen wird, an dem eine weitere symmetrische Wechselspannung anliegt, wobei der erfasste Signalverlauf der zugehörigen unsymmetrischen Wechselspannung so zur Kalibrierung des Messsignals des senkrecht angeordneten Elektrodenpaars herangezogen wird, dass der Füllstand des Behälters auch bei sich ändernder Leitfähigkeit der Flüssigkeit korrekt erfassbar ist. Alterungsbedingte Änderungen der Leitfähigkeit können dadurch kompensiert werden.

Bezüglich weiterer Vorteile der Erfindung wird auf die restlichen Unteransprüche verwiesen.

Die Erfindung wird nachstehend anhand der Beschreibung von Ausführungsbeispielen unter Bezugnahme auf die Zeichnung näher erläutert. Es zeigen:
Fig. 1A eine schematische Darstellung eines Ausführungsbeispiels der erfindungsgemäßen Messvorrichtung;
Fig. 1B eine schematische Darstellung eines weiteren Ausführungsbeispiels der erfindungsgemäßen Messvorrichtung;
Fig. 1C ein Schaltbild einer Ansteuerelektronik einer Ausführungsform der erfindungsgemäßen Messvorrichtung;
Fig. 2A eine schematische Darstellung einer Weiterbildung des Ausführungsbeispiels aus Fig. 1 B;
Fig. 2B ein Schaltbild einer Weiterbildung der Ansteuerelektronik aus Fig. 1C; und
Fig. 3 den Verlauf einer bezüglich Masse unsymmetrischen Wechselspannung und einer bezüglich Masse symmetrischen (gleichspannungsfreien) Wechselspannung.

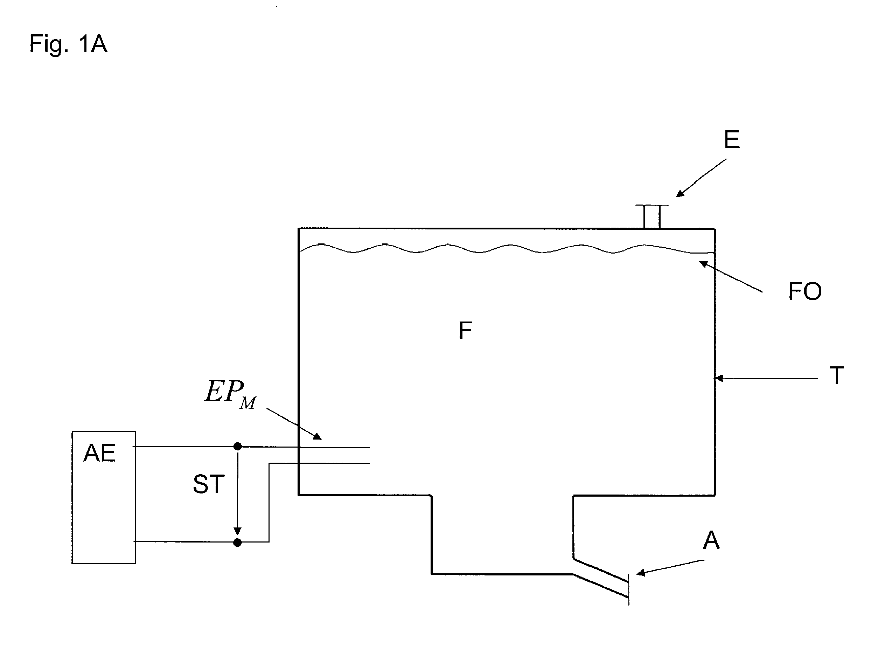

Fig. 1A zeigt eine schematische Darstellung eines ersten Ausführungsbeispiels der vorliegenden Erfindung. In einem Behälter in Form eines Tanks T befindet sich eine Flüssigkeit F, diese kann durch eine Einfüllöffnung E eingebracht werden. Die Flüssigkeit F kann durch eine Auslassöffnung A vom Behälter abgelassen werden. Zwischen einem oberen und einem unteren Ende des Behälters befindet sich ein im Wesentlichen waagerecht angeordnetes Messelektrodenpaar EP_{M}. Zwischen den beiden Elektroden des Messelektrodenpaares EP_{M} besteht eine Leitfähigkeit, solange diese von der leitfähigen Flüssigkeit F umgeben sind, beziehungsweise solange an zumindest einer Stelle jeder Elektrode ein elektrischer Kontakt zu der Flüssigkeit F besteht. Das Messelektrodenpaar EP_{M} ist mit einer Ansteuerelektronik AE verbunden.

Wird die Flüssigkeit F durch die Auslassöffnung A des Tanks T ausgelassen, sinkt die mit FO bezeichnete Oberfläche der Flüssigkeit F ab einem bestimmten Zeitpunkt unter das Niveau der oberen Elektrode des Messelektrodenpaares EP_{M}. Ab diesem Zeitpunkt ist die durch die leitfähige Flüssigkeit F hervorgerufene elektrische Verbindung zwischen den beiden Elektroden des Messelektrodenpaares EP_{M} unterbrochen, wodurch die Aussage getroffen werden kann, dass die Flüssigkeitsoberfläche FO sich unterhalb der oberen der beiden Elektroden des Messelektrodenpaares EP_{M} befindet. Die hier gezeigte Anordnung des Messelektrodenpaares EP_{M} ermöglicht daher eine Grenzwertmessung, bei der derjenige Pegelstand der Flüssigkeit erfasst werden kann, der dem Niveau des Messelektrodenpaars EP_{M} entspricht.

In einer nicht näher gezeigten Weiterbildung dieses Ausführungsbeispiels sind mehrere Messelektrodenpaare EP_{M} parallel zur Flüssigkeitsoberfläche FO an der Wandung des Tanks T angebracht. Somit kann an mehreren Stellen des Tanks T eine Aussage über die Höhe des Füllstandes getroffen werden; d.h. jedes angebrachte Elektrodenpaar ergibt einen diskreten Messwert für den jeweils erreichten Füllstand des Tanks T.

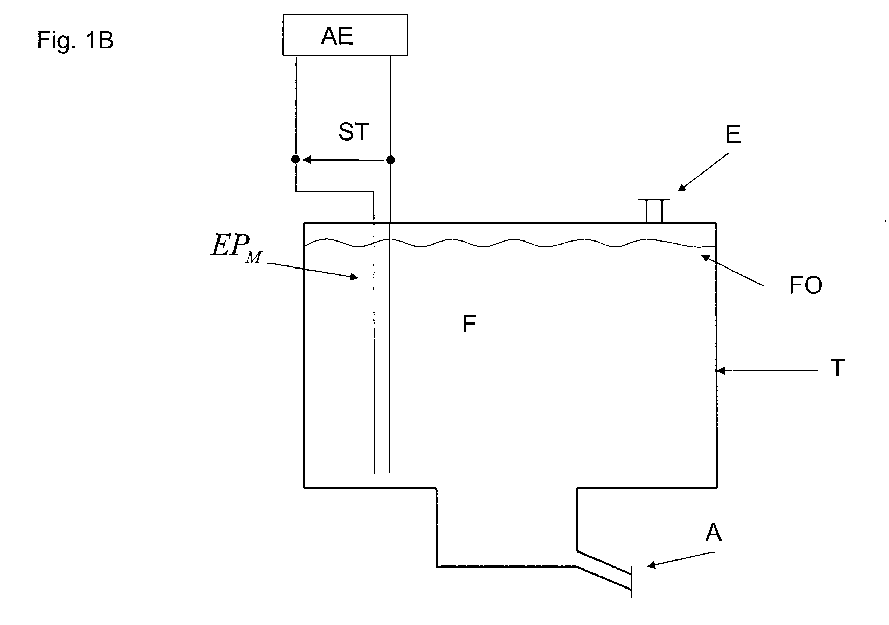

Fig. 1B zeigt eine schematische Darstellung eines weiteren Ausführungsbeispiels der vorliegenden Erfindung. Der Unterschied zu dem in Fig. 1A gezeigten Ausführungsbeispiel besteht darin, dass das Messelektrodenpaar EP_{M} zwischen einem oberen und unteren Ende des Tanks T im Wesentlichen senkrecht angeordnet ist. Bei dieser Anordnung besteht ein linearer Zusammenhang zwischen der Leitfähigkeit und dem Füllstand der Flüssigkeit F, zumindest solange ein Teil der Elektroden von der leitfähigen Flüssigkeit F umgeben ist. Mit der dargestellten Anordnung kann daher zu jedem Zeitpunkt aufgrund der Leitfähigkeit der Flüssigkeit zwischen den beiden Elektroden des Messelektrodenpaares EP_{M} eine Aussage über den jeweiligen Füllstand getroffen werden.

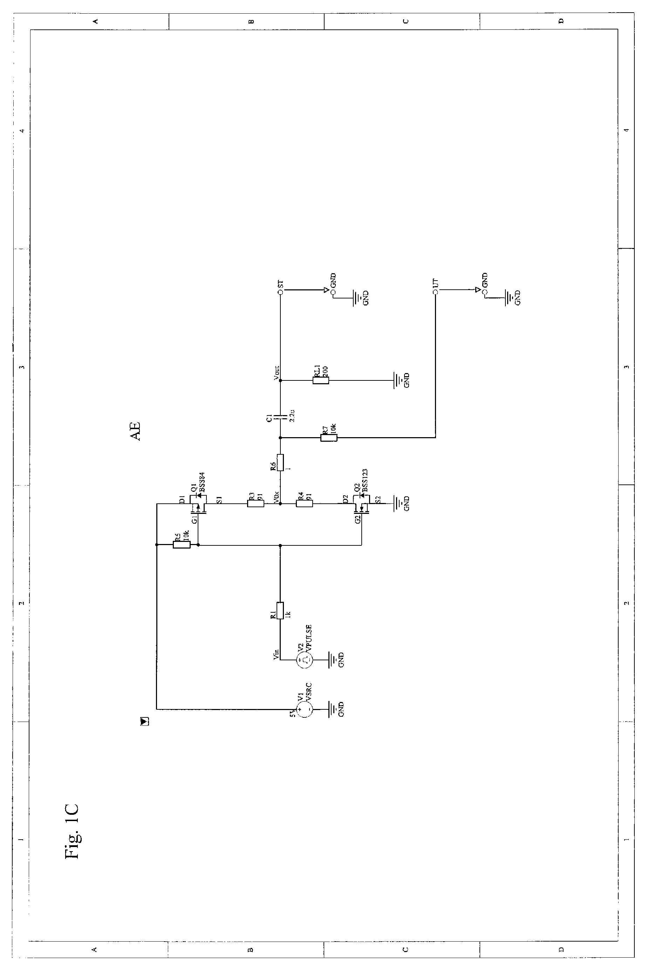

Fig. 1C zeigt ein Schaltbild der Ansteuerelektronik AE, die für die Ausführungsbeispiele der Fig. 1A und Fig. 1B geeignet ist. Eine Versorgungsspannungsquelle V1 ist mit ihrem negativen Pol mit einem Bezugspotential GND (Masse) und mit ihrem positiven Pol mit einem ersten Anschluss eines Widerstandes R5 verbunden. Der erste Anschluss des Widerstands R5 ist weiter mit einem Sourceanschluss S1 eines Feldeffekttransistors Q1 verbunden. Ein zweiter Anschluss des Widerstands R5 ist mit einem Gateanschluss G1 des Feldeffekttransistors Q1 und einem Gateanschluss G2 eines Feldeffekttransistors Q2 verbunden. Ein Drainanschluss D1 des Feldeffekttransistors Q1 ist mit einem ersten Anschluss eines Widerstandes R3 verbunden. Ein Drainanschluss D2 des Feldeffekttransistors Q2 ist mit einem ersten Anschluss eines Widerstandes R4 verbunden. Ein zweiter Anschluss des Widerstandes R3 und ein zweiter Anschluss des Widerstandes R4 sind mit einem ersten Anschluss eines Widerstandes R6 verbunden. Ein Sourceanschluss S2 des Feldeffekttransistors Q2 ist mit dem Bezugspotential GND verbunden.

Eine mit V_{PULSE} bezeichnete Impulsspannungsquelle liefert ein Impulssignal V2, das gegenüber dem Bezugspotential GND positive, periodisch wiederkehrende Rechteckimpulse enthält und an einem ersten Anschluss eines Widerstandes R1 anliegt. Ein zweiter Anschluss des Widerstandes R1 ist mit dem Gateanschluss G2 des Feldeffekttransistors Q2 verbunden. Ein zweiter Anschluss des Widerstandes R6 ist mit einem Eingang eines Kondensators C1 und mit einem ersten Anschluss eines Widerstandes R7 verbunden. Ein Ausgang des Kondensators ist mit einem ersten Anschluss eines Widerstandes RL verbunden. Der Widerstand RL ist mit einem zweiten Anschluss mit dem Bezugspotential GND verbunden.

In der in Fig. 1C dargestellten Schaltung der Ansteuerelektronik AE ist dem Widerstand R1 ein Widerstandswert von 1 kΩ, den Widerständen R3 und R4 jeweils ein Widerstandswert von 91 Ω, dem Widerstand R5 ein Widerstandswert von 10 kΩ, dem Widerstand R6 ein Widerstandswert von 1 Ω und dem Widerstand R7 ein Widerstandswert von 10 kΩ zugeordnet.

Die Versorgungsspannungsquelle V1 erzeugt gegenüber dem Bezugspotential GND eine positive Gleichspannung von 5V. Bei dem Feldeffekttransistor Q1 handelt es sich einen Feldeffekttransistor des bekannten Typs BSS84 und bei dem Feldeffekttransistor Q2 um einen Feldeffekttransistor des bekannten Typs BSS123. Der Kondensator C1 weist eine Kapazität von 2,2 µF auf.

Der in der Schaltung der Fig. 1C dargestellte Widerstand RL1 repräsentiert den Widerstandswert (d.h. den Kehrwert der Leitfähigkeit) der Flüssigkeit F. Das heißt, die beiden Anschlüsse des Widerstandes RL1 entsprechen den Anschlüssen der in den Fig.1A und 1B gezeigten Elektroden des Messelektrodenpaares EP_{M} und der Widerstand RL1 entspricht dem momentanen Widerstandswert der zwischen den Elektroden befindlichen Flüssigkeit F.

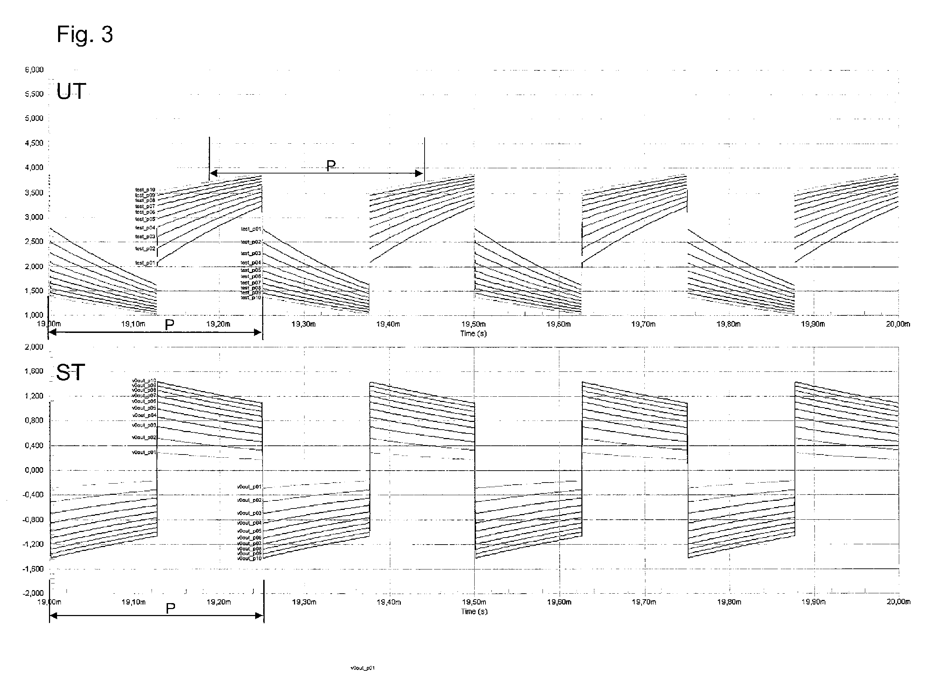

Die Schaltungsanordnung der Fig. 1C arbeitet wie folgt: Das von der Impulsspannungsquelle V_{PULSE} gelieferte Impulssignal V2 wird von den beiden Transistoren verstärkt, so dass am Eingang des Kondensators C1 schließlich das in der Fig.3 oben gezeigte Rechtecksignal UT anliegt, das eine unsymmetrische Wechselspannung darstellt, deren niedriger Wert ca. 1 V beträgt, während sein hoher Wert ca. 3V beträgt. Diese Wechselspannung UT ist also gleichspannungsbehaftet, da sie nur positive Spannungsanteile enthält. Zur Messung wird die Spannung dieses Rechtecksignals UT an einem zweiten Anschluss des Widerstands R7 gegenüber dem Bezugspotential GND abgegriffen.

Aufgrund der periodische Umladung des Kondensators C1 durch den momentanen Widerstand RL (Leitfähigkeit der Flüssigkeit bzw. Füllstandshöhe) zwischen den angeschlossenen Elektroden entsteht an den beiden Elektroden eine symmetrische Wechselspannung ST, die gemäß der in Fig.3 unten gezeigten Kurve im wesentlichen gleichspannungsfrei ist und zwischen den Werten +1.5 und -1.5 V schwankt. Wie aus der Kurvenschar der Fig.3 zu erkennen ist, ist die Höhe des negativen bzw. positiven Impulses der symmetrischen Wechselspannung ST abhängig von der momentanen Leitfähigkeit der Flüssigkeit F. Die Werte +1.5 bzw. -1.5 V repräsentieren hierbei die größte zu erwartenden Leitfähigkeit (d.h. den geringsten Widerstand) der Flüssigkeit, während die Werte +0.3 bzw. -0.3 V die kleinste zu erwartende Leitfähigkeit widerspiegeln. Einige repräsentative Werte des Widerstands der Flüssigkeit sind in der Fig.3 mit p01 bis p10 gezeigt, wobei größere Zahlen einen höheren Widerstandswert angeben. Mit anderen Worten, wenn die in Fig. 3 gezeigte Spannung ST an dem senkrecht angeordneten Elektrodenpaar der Fig. 1B anliegt, ist die jeweilige Höhe der Spannungsimpulse von ST umgekehrt proportional zum jeweiligen Füllstand des Tanks T.

Die Messung der symmetrischen Wechselspannung ST würde aber eine aufwendige Gleichrichtung oder einen DIA-Wandler mit negativer Versorgungsspannung erfordern. Die Erfindung beruht nun auf der Erkenntnis, dass die dem Kondensator C1 eingangsseitig eingeprägte unsymmetrische Wechselspannung UT einen Spannungsverlauf hat, der durch Rückkopplung ebenfalls proportional zur Leitfähigkeit bzw. zum momentanen Füllstand ist, wie aus der in Fig.3 gezeigten Kurvenschar der Spannung UT unmittelbar ersichtlich ist. Erfindungsgemäß wird als Messgröße daher die Spannung dieses Rechtecksignals UT erfasst, indem am zweiten Anschluss des Widerstands R7 der entsprechende Wert abgegriffen wird. Dieser hat nur positive Komponenten und kann daher problemlos bzw. ohne vorherige Gleichrichtung von einem D/A-Wandler in geeignete Messwerte für einen Mikrocomputer umgesetzt werden. Die Messwerte können nach vorheriger Kalibrierung unter Berücksichtigung des verwendeten Tanks und der Geometrie der Elektroden dann zur Erzeugung eines Signals verwendet werden, das im Fall der Ausführungsform der Fig. 1B den Füllstand des Tanks angibt.

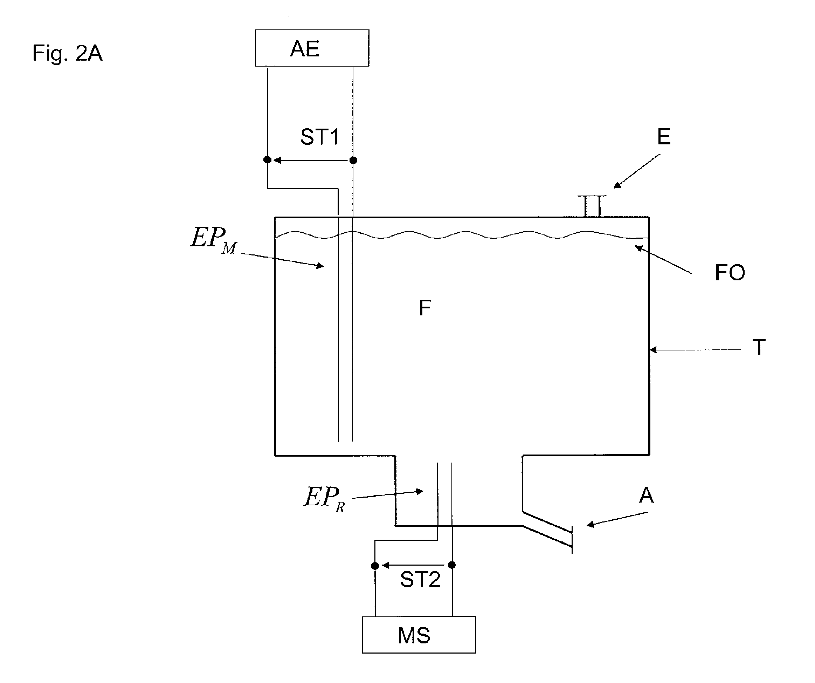

Fig. 2A zeigt eine Weiterbildung des Ausführungsbeispiels aus Fig. 1B. Der Unterschied zu der Anordnung gemäß Fig. 1B besteht darin, dass ein Referenzelektrodenpaar EP_{R} zusätzlich zu dem Messelektrodenpaar EP_{M} in dem Tank T angeordnet ist. Das Referenzelektrodenpaar EP_{R} ist so angeordnet, dass es zumindest zum Zeitpunkt einer Referenzmessung vollständig von der Flüssigkeit F benetzt ist. Das Referenzelektrodenpaar EP_{R} ist daher gemäß Fig. 2A vorzugsweise im Auslassbereich des Tanks T angeordnet, so dass es erst dann nicht mehr von der Flüssigkeit benetzt wird, wenn der Tank T praktisch leer ist, wobei in diesem Fall eine Kalibrierung der Messwerte auch nicht mehr nötig ist.

Da sich der von dem Referenzelektrodenpaares EP_{R} aufgrund seiner Anordnung gelieferte Messwert bei der Füllstandsmessung nicht in Abhängigkeit vom Füllstand, sondern alleine in Abhängigkeit von der momentanen Leitfähigkeit der Flüssigkeit ändert, kann dieser Messwert dazu verwendet werden, das Ausgangssignal des Messelektrodenpaares EP_{M} zu kalibrieren bzw. in Abhängigkeit von der momentanen Leitfähigkeit der Flüssigkeit zu korrigieren.

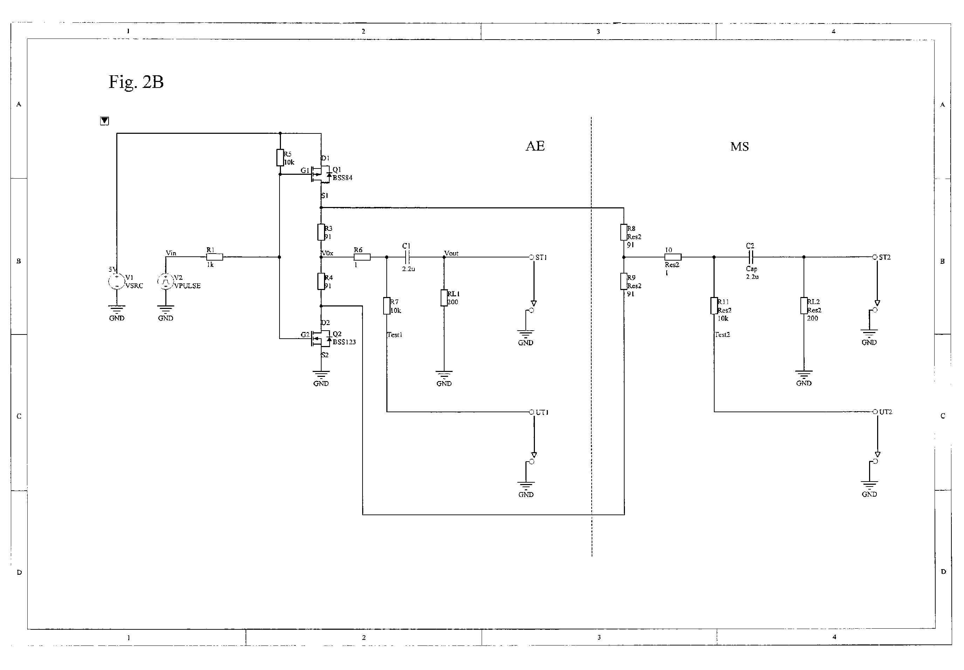

In Fig. 2B ist eine Weiterbildung der Schaltung der Ansteuerelektronik AE aus Fig. 1C dargestellt, die für die in Fig. 2A gezeigte Anordnung vorgesehen ist und die für den Kalibierungsvorgang zusätzlich zu der Schaltungsanordnung aus Fig. 1C eine Messschaltung MS enthält, die dem Referenzelektrodenpaar EP_{R} eine eigene symmetrische Wechselspannung zuführt, deren Verlauf ebenfalls der in der unteren Hälfte der Fig.3 gezeigten Kurvenschar entsprechen würde.

Die Messschaltung MS ist wie folgt aufgebaut. Ein Widerstand R8 ist mit einem ersten Anschluss mit dem Drainanschluss D1 des Feldeffekttransistors Q1 und mit dem ersten Anschluss des Widerstandes R3 verbunden. Ein Widerstand R9 ist mit einem ersten Anschluss mit dem zweiten Anschluss des Widerstands R4 und dem Drainanschluss D2 des Feldeffekttransistors Q2 verbunden. Ein zweiter Anschluss des Widerstandes R8 und ein zweiter Anschluss des Widerstandes R9 sind mit einem ersten Anschluss eines Widerstandes R10 verbunden. Ein zweiter Anschluss des Widerstandes R10 ist mit einem ersten Anschluss eines Widerstandes R11 und mit einem Eingang eines Kondensators C2 verbunden. Ein Ausgang des Kondensators C2 ist mit einem ersten Anschluss eines Widerstandes RL2 verbunden, und ein zweiter Anschluss des Widerstandes RL2 ist mit dem Bezugspotential GND verbunden.

Die Messschaltung MS entspricht folglich demjenigen Schaltungsteil, der an den Drainanschlüssen D1 und D2 angeschlossen ist, und sie befindet sich in Parallelschaltung zu diesem Schaltungsteil.

In der in Fig. 2B dargestellten Schaltung der Ansteuerelektronik AE ist den Widerständen R8 und R9 jeweils ein Widerstandswert von 91 Ω, dem Widerstand R10 ein Widerstandswert von 1 Ω und dem Widerstand R11 ein Widerstandswert von 10 kΩzugeordnet. Der Kondensator C2 weist eine Kapazität von 2,2 µF auf.

Der in der Schaltung der Fig. 2B dargestellte Widerstand RL2 dient hierin lediglich zur Veranschaulichung des Widerstandes der Flüssigkeit F. Das heißt, dass es sich bei dem ersten Anschluss und dem zweiten Anschluss des Widerstandes RL2 eigentlich um die Elektroden des Referenzelektrodenpaares EP_{R} und bei dem Widerstand RL2 um die Flüssigkeit beziehungsweise deren Widerstand handelt.

Der Verlauf der unsymmetrischen Wechselspannung UT, die dem Referenzelektrodenpaar EP_{R} eingeprägt wird, entspricht, wie bereits erwähnt, dem Verlauf derjenigen Wechselspannung, die dem Messelektrodenpaar EP_{M} eingeprägt wird, so dass bezüglich der Arbeitsweise dieser Schaltung auf die Beschreibung der Fig. 1C verwiesen werden darf. Wesentlich ist, dass das für die Kalibrierung vorgesehene Signal am Ausgang des Widerstands R11 abgegriffen und z.B. über einen A/D-Wandler dem nicht näher gezeigten Mikroprozessor zugeführt wird. Da dieses Signal keine negativen Komponenten enthält, ist weder eine Gleichrichtung noch eine negative Versorgungsspannung für den A/D-Wandler erforderlich. Da zudem keine weiteren aktiven Bauelemente benötigt werden, da infolge der Parallelschaltung die durch die Transistoren Q1 und Q2 bereitgestellte Treiberstufe verwendbar ist, werden die Schaltungskosten durch die zusätzliche Kalibrierung kaum nennenswert erhöht.

In einer Weiterbildung des Ausführungsbeispiels gemäß Fig. 2B können weitere Messelektrodenpaare *EP_{M}* oder Referenzelektrodenpaare *EP_{R}* an die Ansteuerelektronik AE angeschlossen werden. Hierzu müssen der Messschaltung MS lediglich weitere Messschaltungen MS parallel geschalten werden. Auch hier kann bei geeigneter Dimensionierung der Transistoren ggf. auf weitere aktive Treiberstufen verzichtet werden.

Wie bereits erläutert wurde, zeigt Fig. 3 sowohl den Verlauf des unsymmetrischen (gleichspannungsbehafteten) Taktsignals UT als auch den Verlauf des symmetrischen (gleichspannungsfreien) Taktsignals ST. Das unsymmetrische Taktsignal UT wird an einem zweiten Anschluss des Widerstands R7 gegenüber dem Bezugspotential GND (Fig. 1C und Fig. 2B) abgegriffen. Das symmetrische (gleichspannungsfreie) Taktsignal ST wird an den beiden Elektroden des Messelektrodenpaares EP_{M} (Fig. 1A und Fig. 2A), also am Ausgang des Kondensators C1 gegenüber dem Bezugspotential (Fig. 1C und Fig. 2B) abgegriffen.

Die beiden Taktsignale ST und UT verlaufen periodisch mit einer Periodendauer P, die sich aus der Frequenz des von der Impulsspannungsquelle V_{PULSE} gelieferten Impulssignals V2 ergibt. Die eingangsseitige Messung des Taktsignals UT, das für die Zwecke der Erfindung verwendet wird, erfolgt vorzugsweise etwa in der Mitte jedes Impulses; wenn mehrere aufeinanderfolgende Impulse gemittelt werden, können auf Rauschen oder dergleichen zurückzuführende Schwankungen ggf. herausgefiltert werden.

Bei dem Taktsignal UT kann es sich, wie in Fig. 3 dargestellt ist, um ein angenähertes Rechtecksignal handeln. Es können jedoch auch beliebige andere periodische Wechselspannungen verwendet werden. Wesentlich ist, dass der Spannungswert des Taktsignals jeweils im zeitlichen Abstand der Periodendauer P beziehungsweise einem Vielfachen der Periodendauer P ermittelt wird. Bei der Bewertung des Signalverlaufs des Taktsignals UT ist weiter zu beachten, dass die Auswertung dieses Signals UT nicht an dessen Flanken erfolgen sollte.

Durch die Kenntnis des Schaltungsaufbaus, der Werte des Widerstands R7 und des Kondensators C1, die Kenntnis der Periodendauer P, des Spannungswertes des Taktsignals UT zu einem bestimmten Zeitpunkt nach einer oder mehrerer Periodendauern P, kann die Leitfähigkeit der Flüssigkeit F ermittelt werden.

Die Bewertung des Signalverlaufs des Taktsignals UT erfolgt in vorteilhafter Weise durch einen Mikroprozessor, der einen A/D-Wandler beinhaltet. Da ein üblicher A/D-Wandler, wie er z.B. in Mikrocontrollern integriert ist, nur positive Spannungen verarbeiten kann, wird das unsymmetrische Taktsignal UT, und nicht das symmetrische Taktsignal ST zur Auswertung der Messergebnisse herangezogen. Wesentlich bei der Auswertung des unsymmetrischen Taktsignals UT ist, dass dessen Spannungswert jeweils im zeitlichen Abstand einer Periodendauer P erfasst wird.

Bei Verwendung eines Mikroprozessors kann dieser auch als Impulsspannungsquelle V_{PULSE} verwendet werden, indem er beispielsweise durch Pulsweitenmodulation einen periodischen Rechteckimpuls zur Verfügung stellt. Zusätzlich kann der Mikroprozessor weitere Aufgaben, wie beispielsweise die Verwertung der erfassten Messergebnisse übernehmen.

Wegen noch anderer Vorteile der Erfindung wird ausdrücklich auf die Offenbarung der Figuren Bezug genommen.

### Bezugszeichenliste:

- T: Behälter bzw. Tank
- E: Einfüllöffnung
- A: Auslassöffnung
- F: Flüssigkeit
- FO: Flüssigkeitsoberfläche
- EP_{M}: Mess-Elektrodenpaar
- EP_{R}: Referenz-Elektrodenpaar
- AE: Ansteuerelektronik
- GND: Bezugspotential (Masse)
- UT: Unsymmetrisches (gleichspannungsbehaftetes) Taktsignal (Rechtecksignal)
- ST: Symmetrisches (gleichspannungsfreies) Taktsignal
- C1, C2: Kondensatoren
- V1: Versorgungsspannungsquelle
- V2: Impulssignal
- V_{PULSE}: Impulsspannungsquelle
- R1, R3, R4, R5, R6, R7, R8, R9, R10, R11: Widerstände
- RL1, RL2: Widerstand der Flüssigkeit
- Q1, Q2: Feldeffekttransistoren
- D1, D2: Drainanschluss
- G1, G2: Gateanschluss
- S1, S2: Sourceanschluss
- MS: Messschaltung
- P: Periodendauer

## Patentansprüche

1. Messvorrichtung zum Erfassen der Leitfähigkeit einer in einem Behälter (T) befindlichen Flüssigkeit (F), mit
mindestens einem Elektrodenpaar (EP_{M}, EP_{R}), das innerhalb des Behälters (T) angeordnet und dort der zu messenden Flüssigkeit (F) ausgesetzt ist, und
einer Ansteuerelektronik (AE), die an das jeweilige Elektrodenpaar (EP_{M}, EP_{R}) eine bezüglich Masse symmetrische, im wesentlichen gleichspannungsfreie Wechselspannung (ST) anlegt und aus dem sich benetzungsabhängig ändernden Widerstand des Elektrodenpaars die Leitfähigkeit der Flüssigkeit (F) ermittelt, ***dadurch gekennzeichnet, dass***
die Ansteuerelektronik (AE) eine unsymmetrische Wechselspannung (UT) erzeugt, deren Phasen die gleiche Polarität aufweisen,
diese unsymmetrische Wechselspannung (UT) in die an dem jeweiligen Elektrodenpaar (EP_{M}, EP_{R}) anliegende symmetrische Wechselspannung (ST) umsetzt, und die Leitfähigkeit der Flüssigkeit (F) aus dem Signalverlauf der unsymmetrischen Wechselspannung (UT) ermittelt.

2. Messvorrichtung nach Anspruch 1, ***dadurch gekennzeichnet, dass** die* Ansteuerelektronik (AE) als unsymmetrische Wechselspannung ein Rechtecksignal (UT) mit positiven Phasen erzeugt und an den Eingang eines Kondensators (C1, C2) anlegt, dessen Ausgangsanschluss mit der einen Elektrode des jeweiligen Elektrodenpaars (EP_{M}, EP_{R}) verbunden ist, während die andere Elektrode des Elektrodenpaars (EP_{M}, EP_{R}) mit Masse verbunden ist.

3. Messvorrichtung nach Anspruch 2, ***dadurch gekennzeichnet, dass** die* Ansteuerelektronik (AE) bei jeder zweiten Phase des unsymmetrischen Rechtecksignals (UT), vorzugsweise in der Mitte dieser Phase, die am Eingang des Kondensators (C1, C2) anliegende Spannung erfasst und daraus die Leitfähigkeit der Flüssigkeit (F) ermittelt.

4. Messvorrichtung nach Anspruch 3, ***dadurch gekennzeichnet, dass** die* Ansteuerelektronik (AE) die Leitfähigkeit der Flüssigkeit (F) aus einer Mittelwertbildung mehrerer aufeinanderfolgender Messvorgänge ermittelt.

5. Messvorrichtung nach einem der Ansprüche 1 bis 4, ***dadurch gekennzeichnet, dass*** die Ansteuerelektronik (AE) aus der erfassten Leitfähigkeit der Flüssigkeit (F) einen Füllstandswert des Behälters (T) ermittelt.

6. Messvorrichtung nach einem der Ansprüche 1 bis 5, ***dadurch gekennzeichnet, dass*** zwischen dem oberen und dem unteren Ende des Behälters (T) mindestens ein im Wesentlichen waagrecht angeordnetes Elektrodenpaar (EP_{M}) vorgesehen ist.

7. Messvorrichtung nach einem der Ansprüche 1 bis 5, ***dadurch gekennzeichnet,* dass** zwischen dem oberen und dem unteren Ende des Behälters (T) ein im wesentlichen senkrecht angeordnetes Elektrodenpaar (EP_{M}) vorgesehen ist, wobei sich der erfasste Signalverlauf der unsymmetrischen Wechselspannung (UT) in Abhängigkeit vom Füllstand des Behälters (T) ändert.

8. Messvorrichtung nach Anspruch 7, ***dadurch gekennzeichnet, dass*** in der Nähe des Bodens des Behälters (T) ein Referenz-Elektrodenpaar (EP_{R}) vorgesehen ist, an dem eine weitere symmetrische Wechselspannung (ST) anliegt, wobei der erfasste Signalverlauf der zugehörigen unsymmetrischen Wechselspannung (UT) so zur Kalibrierung des Messsignals des senkrecht angeordneten Elektrodenpaars (EP_{M}) herangezogen wird, dass der Füllstand des Behälters auch bei sich ändernder Leitfähigkeit der Flüssigkeit korrekt erfassbar ist.

9. Messvorrichtung nach einem der Ansprüche 1 bis 8, ***dadurch gekennzeichnet, dass*** die unsymmetrische Wechselspannung (UT) ein Rechtecksignal mit einer Taktfrequenz von ca. 1 kHz ist.

10. Messvorrichtung nach einem der Ansprüche 1 bis 9, ***dadurch gekennzeichnet, dass*** die Ansteuerelektronik (AE) einen Mikroprozessor enthält, der den Signalverlauf der jeweils erfassten unsymmetrischen Wechselspannung (UT) nach entsprechender AD-Wandlung bewertet und daraus die Leitfähigkeit der Flüssigkeit bzw. den Füllstand des Behälters (T) errechnet.

11. Verfahren zum Erfassen der Leitfähigkeit einer in einem Behälter (T) befindlichen Flüssigkeit (F), bei dem
mindestens ein Elektrodenpaar (EP_{M}, EP_{R}) innerhalb des Behälters (T) angeordnet und dort der zu messenden Flüssigkeit (F) ausgesetzt wird, und
an das jeweilige Elektrodenpaar (EP_{M}, EP_{R}) eine bezüglich Masse symmetrische, im wesentlichen gleichspannungsfreie Wechselspannung (ST) angelegt und aus dem sich benetzungsabhängig ändernden Widerstand des Elektrodenpaars die Leitfähigkeit der Flüssigkeit (F) ermittelt wird,
***dadurch gekennzeichnet, dass***
zunächst eine unsymmetrische Wechselspannung (UT) erzeugt wird, deren Phasen die gleiche Polarität aufweisen,
diese unsymmetrische Wechselspannung (UT) in die an das jeweilige Elektrodenpaar (EP_{M}, EP_{R}) angelegte symmetrische Wechselspannung (ST) umgesetzt wird, und die Leitfähigkeit der Flüssigkeit (F) aus dem Signalverlauf der unsymmetrischen Wechselspannung (UT) ermittelt wird.
